# EUROPÄISCHE PATENTSCHRIFT

(11) **EP 1 606 155 B1**
(45) Veröffentlichungstag und Bekanntmachung des Hinweises auf die Patenterteilung: **14.02.2007**
(21) Anmeldenummer: 04715821.7
(22) Anmeldetag: 28.02.2004
(51) Int. Cl.: B60T 17/02, F04C 27/00

(54) **PUMPE**
PUMP
POMPE

(30) Priorität: 03.03.2003 DE 10309068
(43) Veröffentlichungstag der Anmeldung: 21.12.2005
(73) Patentinhaber: LuK Automobiltechnik GmbH & Co. KG, 42499 Hückeswagen (DE)
(72) Erfinder: LAFFIEN, Gerhard, 50733 Köln (DE); SCHULER, Friedrich, 58332 Schwelm (DE)
(86) Internationale Anmeldenummer: PCT/DE2004/000375
(87) Internationale Veröffentlichungsnummer: WO 2004/078548

(56) Entgegenhaltungen:
- DE-A- 2 403 588
- DE-A- 2 833 167
- US-A- 5 954 489

## Beschreibung

Die Erfindung betrifft eine Pumpe, wie z. B. eine Flügelzellenpumpe, Rollenzellenpumpe oder Zahnradpumpe, insbesondere eine Vakuumpumpe für Bremskraftverstärkersysteme in Kraftfahrzeugen, mit einem Gehäuse und einem Gehäusedeckel, mit Rotationsverdrängerelementen, wie z. B. Rotor und Flügel bzw. Rollen oder Zahnräder/Zahnringe und mit einer Dichtungseinrichtung zwischen dem Gehäusedeckel und dem Gehäuse, wobei die Dichtungseinrichtung als Flachdichtung ausgeführt ist.

Derartige Pumpen sind bekannt. Dabei wird bei einer Flachdichtung eine innerhalb des Dichtungsbereiches eingeschlossene Fläche generell herausgestanzt, so dass die Dichtung selbst in der Form des Dichtbereiches ausgeführt ist. Derartige Dichtungseinrichtungen haben allerdings mehrere Nachteile. So erhöht z. B. die Dicke der Flachdichtung den Abstand des Gehäusedeckels vom Gehäuse und damit einen seitlichen Dichtspalt zwischen den Rotationsverdrängerelementen und den Gehäusedeckel.

Die Offenlegungsschrift DE 28 33 167 A zeigt eine Kombination aus einer Ölpumpe und einer Vakuumpumpe, welche von einander durch eine Zwischenplatte 16 getrennt sind. Die Zwischenplatte 16 dient dabei als Anlauffläche für die Zahnräder der Ölpumpe und dichtet die Ölpumpe gegenüber der Vakuumpumpe ab.

Da die Zwischenplatte 16 gegenüber einer Flachdichtung biegesteif ist, werden Druckunterschiede auf der Vakuumpumpenseite nicht zu einer Ausbeulung der Zwischenplatte führen. Bei Verwendung einer Flachdichtung als Anlauffläche können aber Probleme auftreten.

Die Patentschrift US 5,954,489 zeigt eine Vakuumpumpe, deren Rotor durch einen exzentrisch angeordneten Stift angetrieben wird.

Es ist Aufgabe der Erfindung, eine Pumpe darzustellen, die diese Nachteile nicht aufweist.

Die Aufgabe wird gelöst durch eine Pumpe, wie z. B. eine Flügelzellenpumpe, Rollenzellenpumpe oder Zahnradpumpe, insbesondere Vakuumpumpe für Brennkraftverstärkersysteme in Kraftfahrzeugen, mit einem Gehäuse und einem Gehäusedeckel, mit Rotationsverdrängerelementen wie Rotor und Flügel bzw. Rollen oder Zahnräder/Zahnringe, mit einer Dichtungseinrichtung zwischen Gehäusedeckel und Gehäuse, wobei die Dichtungseinrichtung als Flachdichtung ausgeführt ist und die Fläche der Dichtungseinrichtung innerhalb des Dichtbereiches als seitliche/axiale Anlauffläche für die Rotationsverdrängerelemente dient, die sich dadurch auszeichnet, dass die Dichtungseinrichtung im Anlaufflächenbereich zumindest eine Öffnung für einen Druckausgleich zwischen der Ober- und Unterseite des Blecheinsatzes aufweist. Das hat den Vorteil, dass sich keine Druckpolster aufbauen können und so eine Ausbeulung des Blecheinsatzes vermieden wird.

Die durch den Dichtbereich eingeschlossene Fläche wird also nicht, wie bei herkömmlichen Flachdichtungen, herausgestanzt, sondern bleibt erhalten. Das hat den Vorteil, dass z. B. bei einer als Blecheinsatz ausgeführten Flachdichtung die Dicke des Blecheinsatzes bzw. der Dichtungseinrichtung sich nicht auf die Toleranz eines seitlichen Flügeldichtspaltes oder generell eines seitlichen Dichtspaltes der Rotationsverdrängerelemente auswirkt.

Bevorzugt wird eine Pumpe, bei welcher die Dichtungseinrichtung im Dichtbereich mit einer Voll- oder Teilsicke und/oder mit einer Gummierung bzw. anderen gleichwirkenden Elastomeren entlang der Dichtlinie versehen ist. Auch wird eine Pumpe bevorzugt, bei welcher die Anlauffläche der als Blecheinsatz ausgeführten Dichtungseinrichtung aus Stahlblech oder Aluminiumblech oder Messingblech oder Blech aus einer Bronzelegierung ausgebildet ist. Das hat den Vorteil, dass als Werkstoff für den Blecheinsatz ein besonders verschleißfestes Material gewählt werden kann, welches in der Materialpaarung mit den Rotationsverdrängerelementen günstige Laufeigenschaften aufweist und deshalb für das Material des Gehäusedeckels eine freie Werkstoffauswahl nach anderen Kriterien ermöglicht.

Eine erfindungsgemäße Pumpe zeichnet sich dadurch aus, dass der Gehäusedeckel aus Metall oder Kunststoff herstellbar ist. Bevorzugt wird auch eine Pumpe, bei welcher der Gehäusedeckel eine verrippte Struktur aufweisen kann. Das hat den Vorteil, dass eine Erhöhung der Festigkeit bei einer Gewichtsabnahme möglich ist, da der Gehäusedeckel nicht mehr zusätzlich als Lauffläche für die Rotationsverdrängerelemente ausgelegt sein muss.

Die Erfindung wird nun anhand der Figuren beschrieben.

Figur 1 zeigt einen Teilausschnitt einer erfindungsgemäßen Pumpe in einem seitlichen Schnitt.

Figur 2 zeigt eine Aufsicht auf eine erfindungsgemäße Dichtungseinrichtung.

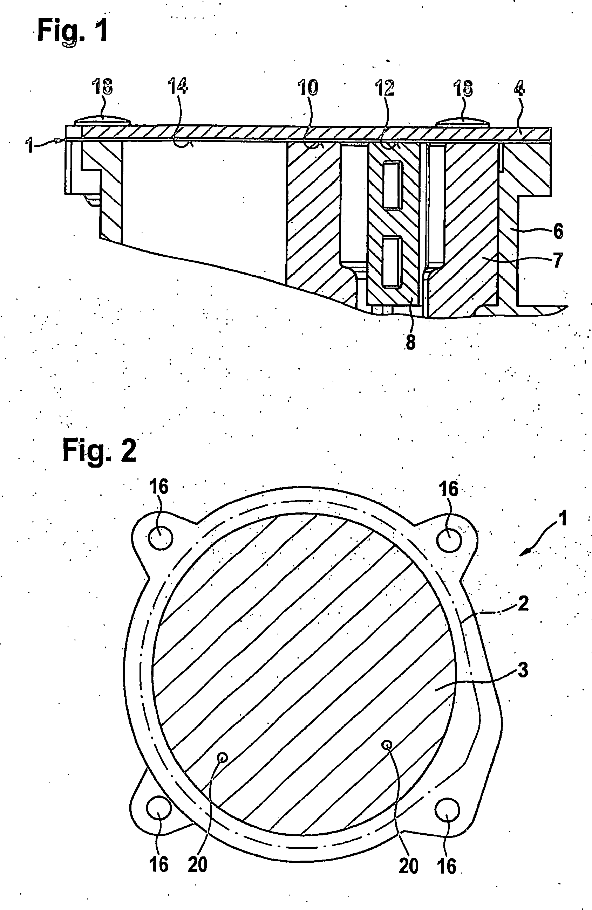

In Figur 1 ist z. B. ein Teil einer Vakuumflügelzellenpumpe im Querschnitt dargestellt. Eine Dichtungseinrichtung, welche als Blecheinsatz 1 ausgeführt ist, ist zwischen einem Gehäusedeckel 4 und einem Pumpengehäuse 6 eingelegt und dichtet daher die beiden Gehäusebauteile gegeneinander ab. Innerhalb des Pumpengehäuses 6 ist ein Rotor 7 angeordnet, welcher in einem Schlitz einen Flügel 8 führt. Derartige Monoflügelzellenvakuumpumpen sind bekannt und bedürfen daher keiner näheren Erläuterung. Wichtig ist, dass die axiale Anlauffläche 10 des Rotors als auch die seitliche Anlauffläche 12 des Flügels 8 gegen eine Seitenfläche 14 des Blecheinsatzes 1 abdichten und damit der Dichtspalt zwischen dem Rotor 7 bzw. dem Flügel 8 und der Dichtung 1 so gering wie möglich ist, ohne allerdings die rotierenden Teile einzuklemmen. Weiterhin soll die Fläche 14 der Dichtung 1 aus einem Material gewählt sein, welches im Hinblick auf das Material des Rotors 7 bzw. des Flügels 8 besonders gute Laufeigenschaften und geringe Verschleißeigenschaften aufweist. Dadurch ist eine Materialwahl für den Gehäusedeckel 4 nach anderen Gesichtspunkten möglich, da der Gehäusedeckel 4 nicht mehr die Funktion einer Anlauffläche für die rotierenden Teile erfüllen muss.

In der Figur 2 ist die Dichtungseinrichtung bzw. der Blecheinsatz 1 in Aufsicht dargestellt. Der Blecheinsatz 1 weist im Dichtungsbereich eine strichpunktiert dargestellte Dichtlinie 2 auf, welche z. B. mit einer Vollsicke oder einer Teilsicke ausgerüstet sein kann, wobei diese Sicken sich nach der Montage des Blecheinsatzes durch Aufpressen des Gehäusedeckels 4 entsprechend verformen und damit den Dichtbereich abdichten. Ferner kann der Dichtbereich um die Dichtlinie 2 herum mit einer zusätzlichen Gummierung oder mit einer anderen dichtfähigen Elastomerbeschichtung versehen sein. Die nicht gummierte, verbleibende Restfläche 3 des Blecheinsatzes stellt damit die Anlauffläche für die Rotationsverdrängerelemente, wie z. B. für den Rotor 7 und für den Flügel 8 bei einer Monoflügelzellenvakuumpumpe dar. Der Blecheinsatz weist ferner 4 Ohren mit Durchgangsöffnungen 16 auf, durch welche die entsprechenden Befestigungsmittel, wie z. B. die Schrauben 18 in Figur. 1, geführt werden und somit der Gehäusedeckel, die Dichtungseinrichtung 1 und das Gehäuse 6 miteinander verpresst werden. Der Blecheinsatz 1 weist ferner mindestens eine Aussparung 20 auf, welche kurz vor oder hinter dem unteren Totpunkt der Monoflügelzellenvakuumpumpe angeordnet sein kann und damit entweder im Druckbereich der Vakuumpumpe oder im Saugbereich der Vakuumpumpe für einen Druckausgleich zwischen der Ober- und Unterseite des Blecheinsatzen sorgt. Dadurch wird eine Verformung des Blecheinsatzes und damit der Lauffläche für die Rotationsverdrängungselemente durch unterschiedliche Drücke vor und hinter der Lauffläche vermieden. Somit werden auf jeden Fall eine ebene Anlauffläche und damit geringe Reibungsverluste für die Rotationsverdrängungselemente gewährleistet.

## Patentansprüche

1. Pumpe, wie Flügelzellenpumpe, Rollenzellenpumpe oder Zahnradpumpe, insbesondere Vakuumpumpe für Brennkraftverstärkersysteme in Kraftfahrzeugen, mit einem Gehäuse (6) und einem Gehäusedeckel (4), mit Rotationsverdrängerelementen, wie Rotor (7) und Flügel (8) bzw. Rollen oder Zahnräder/Zahnringe, mit einer Dichtungseinrichtung zwischen dem Gehäuse (6) und dem Gehäusedeckel (4), wobei die Dichtungseinrichtung (1) als Flachdichtung ausgeführt ist, und die Fläche (14) der Dichtungseinrichtung (1) innerhalb des Dichtbereiches als seitliche /axiale Anlauffläche für die Rotationsverdrängerelemente dient, **dadurch gekennzeichnet, dass** die Dichtungseinrichtung (1) als Blecheinsatz ausgeführt ist und im Anlaufflächenbereich (14) zumindest eine Öffnung (20) für einen Druckausgleich zwischen Ober- und Unterseite des Blecheinsatzes (1) aufweist.

2. Pumpe, nach Anspruch 1, **dadurch gekennzeichnet, dass** die Dichtungseinrichtung (1) im Dichtbereich mit einer Voll- oder Teilsicke und/oder mit einer Gummierung bzw. anderen gleichwirkenden Elastomeren entlang der Dichtlinie (2) versehen ist.

3. Pumpe, nach Anspruch 1 oder Anspruch 2, **dadurch gekennzeichnet, dass** die Anlauffläche (14) der als Blecheinsatz ausgeführten Dichtungseinrichtung (1) aus Stahlblech oder Aluminiumblech oder Messingblech oder Blech aus einer Bronzelegierung ausgebildet ist.

4. Pumpe, nach einem der vorhergehenden Ansprüche, **dadurch gekennzeichnet, dass** der Gehäusedeckel (4) aus Metall oder Kunststoff hergestellt ist.

5. Pumpe, nach einem der vorhergehenden Ansprüche, **dadurch gekennzeichnet, dass** der Gehäusedeckel (4) eine verrippte Struktur aufweist.

## Claims

1. A pump, such as a vane pump, roller cell pump or gear pump, in particular a vacuum pump for vacuum brake booster systems in motor vehicles, with a housing (6) and a housing cover (4), with rotary displacement elements such as rotor (7) and vanes (8) or rollers or gear wheels/ring gears, with a sealing device between the housing (6) and the housing cover (4), the sealing device (1) being implemented as a flat seal, and the area (14) of the sealing device (1) within the sealing area functioning as a lateral/axial running surface for the rotary displacement elements, **characterized in that** the sealing device (1) is implemented as a sheet metal insert and has in the running surface area (14) at least one opening (20) for pressure equalization between the upper and lower sides of the sheet metal insert (1).

2. The pump according to Claim 1, **characterized in that** the sealing device (1) is provided with a full or partial screen and/or a rubber coating or other equivalently acting elastomers in the sealing area along the seal line (2).

3. The pump according to Claim 1 or Claim 2, **characterized in that** the running surface (14) of the sealing device (1) in the form of a sheet metal insert is made of sheet steel or sheet aluminum or sheet brass or sheet of a bronze alloy.

4. The pump according to one of the preceding claims, **characterized in that** the housing cover (4) is made of metal or plastic.

5. The pump according to one of the preceding claims, **characterized in that** the housing cover (4) has a ribbed structure.

## Revendications

1. Pompe telle qu'une pompe à palettes, une pompe multicellulaire à rouleaux ou une pompe à engrenage, en particulier une pompe à vide pour des systèmes de servofreins dans des véhicules automobiles, comprenant un carter (6) et un couvercle de carter (4), des éléments de déplacement rotatifs tels qu'un rotor (7) et des palettes (8) ou des rouleaux, ou bien des roues dentées /des couronnes dentées, comprenant un dispositif d'étanchéité placé entre le carter (6) et le couvercle (4) du carter, où le dispositif d'étanchéité (1) est réalisé comme un joint plat, et la surface (14) du dispositif d'étanchéité (1), à l'intérieur de la zone de joint, sert de surface d'arrêt latérale / axiale pour les éléments de déplacement rotatifs,
**caractérisée en ce que** le dispositif d'étanchéité (1) est réalisé comme un insert en tôle et, dans la zone (14) de la surface d'arrêt, présente au moins une ouverture (20) pour la compensation de pression entre la partie supérieure et inférieure de l'insert en tôle (1).

2. Pompe selon la revendication 1, **caractérisée en ce que** le dispositif d'étanchéité (1) est doté dans la zone du joint, le long de la ligne de joint (2), d'une moulure pleine ou partielle et / ou d'un caoutchoutage ou d'autres élastomères à action équivalente.

3. Pompe selon la revendication 1 ou la revendication 2, **caractérisée en ce que** la surface d'arrêt (14) du dispositif d'étanchéité (1) réalisé comme un insert en tôle est formée dans une tôle en acier ou dans une tôle en aluminium ou dans une tôle en laiton, ou bien dans une tôle se composant d'un alliage de bronze.

4. Pompe selon l'une quelconque des revendications précédentes, **caractérisée en ce que** le couvercle de carter (4) fabriqué est en métal ou en matière plastique.

5. Pompe selon l'une quelconque des revendications précédentes, **caractérisée en ce que** le couvercle (4) du carter présente une structure nervurée.
